(19) **Europäisches Patentamt**
**European Patent Office**
**Office européen des brevets**

(11) **EP 2 663 076 B1**

(12) **EUROPEAN PATENT SPECIFICATION**

(45) Date of publication and mention
of the grant of the patent:
**14.09.2016 Bulletin 2016/37**

(51) Int Cl.:
*H04N 19/154* (2014.01)  *H04N 19/186* (2014.01)
*H04N 19/196* (2014.01)  *H04N 19/146* (2014.01)
*H04N 19/117* (2014.01)  *H04N 19/14* (2014.01)
*H04N 19/17* (2014.01)  *H04N 19/59* (2014.01)
*H04N 19/172* (2014.01)  *H04N 19/192* (2014.01)
*H04N 19/147* (2014.01)  *H04N 19/61* (2014.01)
*H04N 19/85* (2014.01)  *H04N 19/156* (2014.01)
*H04N 19/194* (2014.01)  *H04N 19/30* (2014.01)
*H04N 19/597* (2014.01)

(21) Application number: **13171556.7**

(22) Date of filing: **20.04.2010**

(54) **Filter selection for video pre-processing in video applications**

Filterauswahl für Videovorverarbeitung in Videoanwendungen

Sélection de filtre pour prétraitement vidéo dans des applications vidéo

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.04.2009  US 170995 P**
**04.07.2009  US 223027 P**
**14.09.2009  US 242242 P**

(43) Date of publication of application:
**13.11.2013  Bulletin 2013/46**

(62) Document number(s) of the earlier application(s) in accordance with Art. 76 EPC:
**10719456.5 / 2 422 521**

(73) Proprietor: **DOLBY LABORATORIES LICENSING CORPORATION**
**San Francisco, CA 94103-4813 (US)**

(72) Inventors:
 • **Pahalawatta, Peshala V.**
 **Glendale, CA California 91202 (US)**
 • **Leontaris, Athanasios**
 **Mountain View, CA California 94043 (US)**

 • **Tourapis, Alexandros**
 **Milpitas, CA California 95035 (US)**
 • **Stec, Kevin J.**
 **Los Angeles, CA California 90068 (US)**
 • **Husak, Walter**
 **Burbank, CA California 91505-5300 (US)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
**EP-A1- 1 631 090**  **WO-A1-2008/075247**
**WO-A2-2008/051517**  **US-A1- 2008 192 822**
**US-A1- 2008 260 040**

 • **AMMAR N ET AL: "Switched SVC upsampling filters", 18. JVT MEETING; 75. MPEG MEETING; 14-01-2006 - 20-01-2006; BANGKOK,TH; (JOINT VIDEO TEAM OF ISO/IEC JTC1/SC29/WG11 AND ITU-T SG.16 ),, no. JVT-R075, 11 January 2006 (2006-01-11) , XP030006342, ISSN: 0000-0410**

## Description

### CROSS REFERENCE TO RELATED APPLICATIONS

The present application is a divisional of EP application No. 10719456.5, filed on September 19, 2011.

Said parent application EP10719456.5 is an EP regional stage application of international application No. PCT/US2010/031693, filed April 20, 2010, which claims priority to US provisional application No. 61/242,242, filed on September 14, 2009.

### FIELD

The present disclosure relates to video applications. More in particular, embodiments of the present invention relate to methods and devices for selection of pre-processing filters and filter parameters given the knowledge of a base layer (BL) to enhancement layer (EL) prediction process occurring in the EL decoder and encoder. The methods and devices can be applied to various applications such as, for example, spatially or temporally scalable video coding, and scalable 3D video applications.

### SUMMARY

The invention is defined by the independent claims. The dependent claims concern optional features of some embodiments of the invention.

### BRIEF DESCRIPTION OF THE DRAWINGS

FIGURE 1 shows a scalable video encoding architecture comprising a base layer (BL) encoding section and an enhancement layer (EL) encoding section.
FIGURE 2 shows a decoding architecture corresponding to the encoding system of FIGURE 1.
FIGURE 3 shows an open loop process for performing pre-processor optimization.
FIGURE 4 shows a closed loop process for performing pre-processor optimization.
FIGURE 5 shows a further example of closed loop process where simplified encoding occurs.
FIGURE 6 shows a pre-processing filter stage preceded by a sequence/image analysis stage.
FIGURE 7 shows pre-processing filter selection through feedback received from the EL encoder.
FIGURE 8 shows an architecture where pre-processing filter parameters are predicted based on the filters used for the previous images.

### DESCRIPTION OF EXAMPLE EMBODIMENTS

Methods and devices for selection of pre-processing filters are described.

According to a first embodiment, a method for selecting a pre-processing filter for video delivery is provided, comprising: inputting one or more input images into a plurality of pre-processing filters; processing the output of each pre-processing filter to form, for each pre-processing filter, an output image or data stream; for each pre-processing filter, evaluating a metric of the output image or data stream; and selecting a pre-processing filter among the plurality of pre-processing filters based on the evaluated metric for each pre-processing filter.

According to a third embodiment, a pre-processing filter selector for video delivery is provided, comprising: a plurality of pre-processing filters adapted to receive an input image; processing modules to process the output of each pre-processing filter to form an output image or data stream; metrics evaluation modules to evaluate, for each pre-processing filter, a metric of the output image or data stream; and a pre-processing filter selector to select a pre-processing filter among the plurality of pre-processing filters based on the evaluated metric for each pre-processing filter by the distortion modules.

According to a fourth embodiment, an encoder for encoding a video signal according to the method or methods recited above is provided.

According to a fifth embodiment, an apparatus for encoding a video signal according to the method or methods recited above is provided.

According to a sixth embodiment, a system for encoding a video signal according to the method or methods recited above is provided.

According to a seventh embodiment, a computer-readable medium containing a set of instructions that causes a computer to perform the method or methods recited above is provided.

According to an eighth embodiment, the use of the method or methods recited above to encode a video signal is provided.

One method for scalable video delivery is to subsample the original video to a lower resolution and to encode the subsampled data in a base layer (BL) bitstream. The base layer decoded video can then be upsampled to obtain a prediction of the original full resolution video. The enhancement layer (EL) can use this prediction as a reference and encode the residual information that is required to recover the original full resolution video. The resolution subsampling can occur in the spatial, temporal and pixel precision domains. See, for example, J.R. Ohm, "Advances in Scalable Video Coding," Proceedings of the IEEE, vol. 93, no. 1, January 2005. Scalable video delivery may also be related to bitdepth scalability, as well as 3D or multiview scalability.

While the figures and some embodiments of the present application make reference to a single enhancement layer, the present disclosure is also directed to cases where more than one enhancement layer is present, to further improve the quality of the decoded video, or to improve the functionality/flexibility/complexity of the video delivery system.

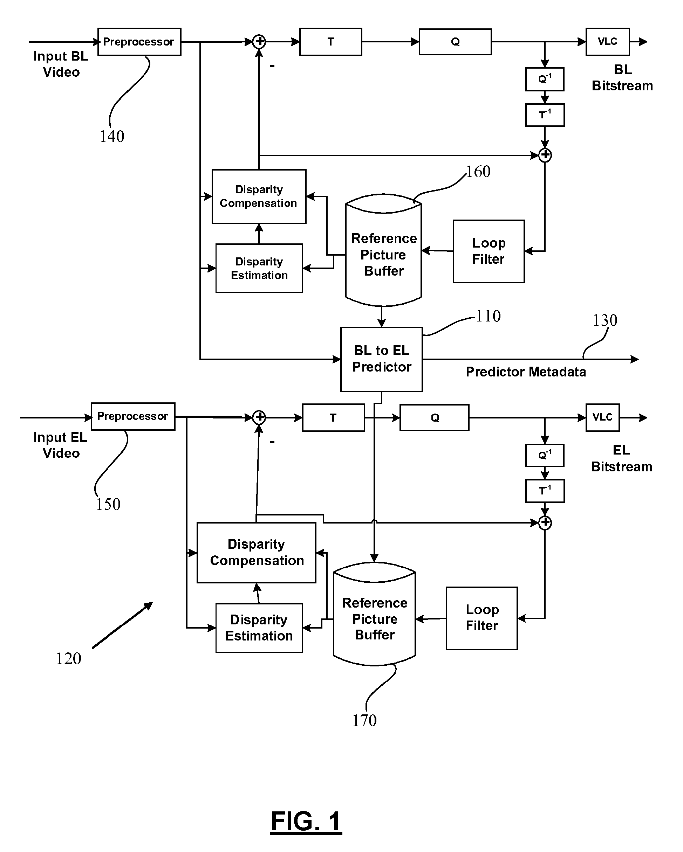

FIGURE 1 illustrates an example of such a scalable video coding system where, by way of example, only one enhancement layer is used. The BL (Base Layer) to EL (Enhancement Layer) predictor module (110) predicts the EL from the reconstructed BL video and inputs the prediction as a reference to the EL encoder (120).

In the case of stereo or multi-view video data transmission, the subsampling can be a result of interleaving of different views into one image for the purpose of transmission over existing video delivery pipelines. For example, checkerboard, line-by-line, side-by-side, over-under, are some of the techniques used to interleave two stereoscopic 3D views into one left/right interleaved image for the purpose of delivery. In each case, different sub-sampling methods may also be used such as quincunx, horizontal, vertical, etc.

US Provisional Application No. 61/140,886 filed on December 25, shows a number of content adaptive interpolation techniques that can be used within the BL to EL predictor block (110) of FIGURE 1. Additionally, US Provisional Application No. 61/170,995 filed on April 20, 2009 shows directed interpolation techniques, in which the interpolation schemes are adapted depending on content and the image region to be interpolated, and the optimal filters are signaled as metadata to the enhancement layer decoder.

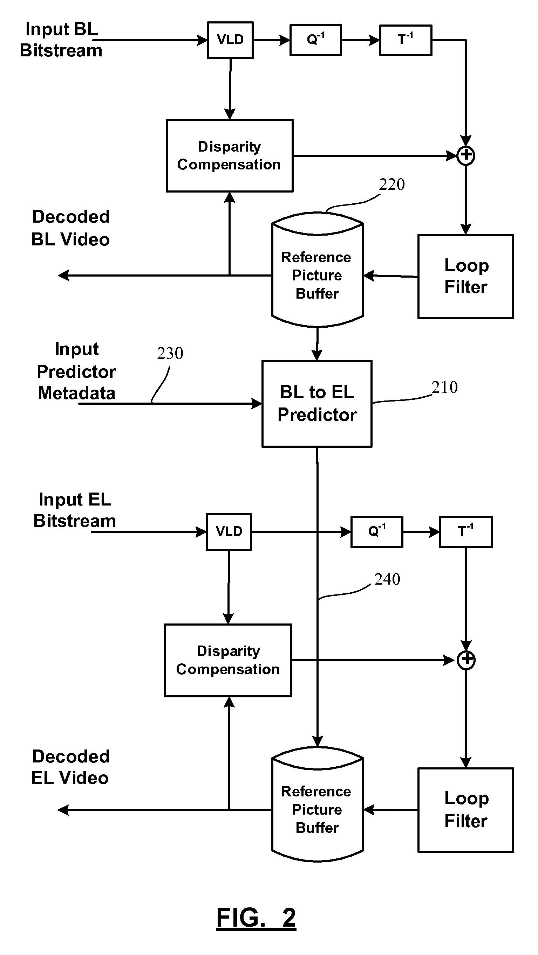

FIGURE 2 shows the corresponding decoder architecture for the BL and EL. The BL to EL predictor (210) on the decoder side uses the base layer reconstructed images (220) along with guided interpolation metadata (230) - corresponding to the predictor metadata (130) of FIGURE 1 - to generate a prediction (240) of the EL. Predictor metadata are discussed more in detail in US Provisional 61/170,995 filed on April 20, 2009.

Turning back to FIGURE 1, the creation of the BL and EL images can be preceded by pre-processing modules (140), (150). Pre-processing is applied to images or video prior to compression in order to improve compression efficiency and attenuate artifacts. The pre-processing module can, for example, comprise a downsampling filter that is designed to remove artifacts such as aliasing from the subsampled images. The downsampling filters can be fixed finite impulse response (FIR) filters such as those described in W. Li, J-R. Ohm, M. van der Schaar, H. Jiang and S. Li, "MPEG-4 Video Verification Model Version 18.0," ISO/IEC JTC1/SC29/WG11 N3908, January 2001, motion compensated temporal filters such as those described in E. Dubois and S. Sabri, "Noise Reduction in Image Sequences Using Motion-Compensated Temporal Filtering," IEEE Trans. on Communications, Vol. COM-32, No. 7, July 1984, or adaptive filters such as those described in S. Chang, B. Yu, and M. Vetterli, "Adaptive Wavelet Thresholding for Image Denoising and Compression," IEEE Trans. On Image Processing, vol. 9, no. 9, pp. 1532-1546, September 2000. The downsampling filters can also be jointly optimized with a particular upsampling/interpolation process such as that described in Y. Tsaig, M. Elad, P. Milanfar, and G. Golub, "Variable Projection for Near-Optimal Filtering in Low Bit-Rate Coders," IEEE Trans. on Circuits and Systems for Video Technology, vol. 15, no. 1, pp. 154-160, January 2005.

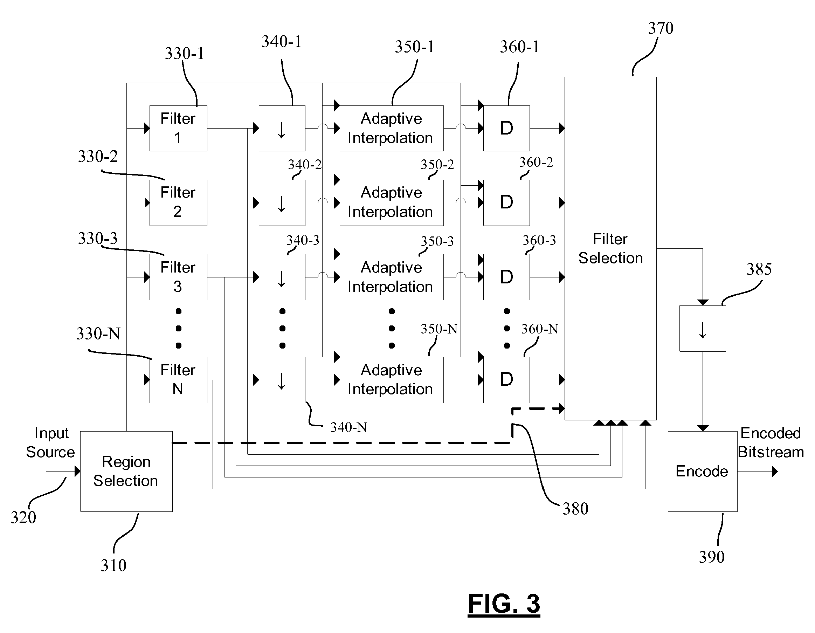

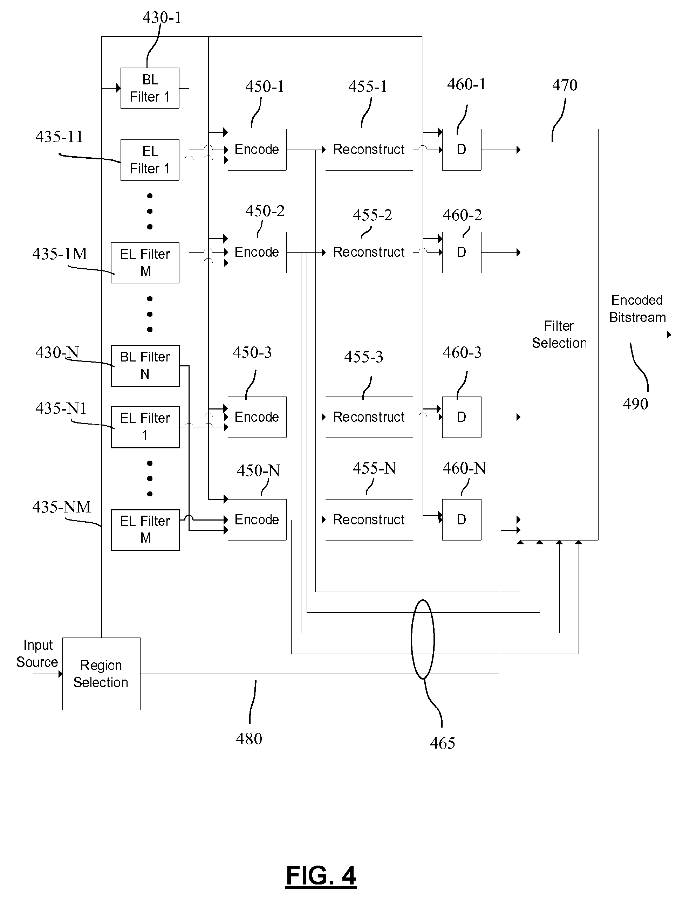

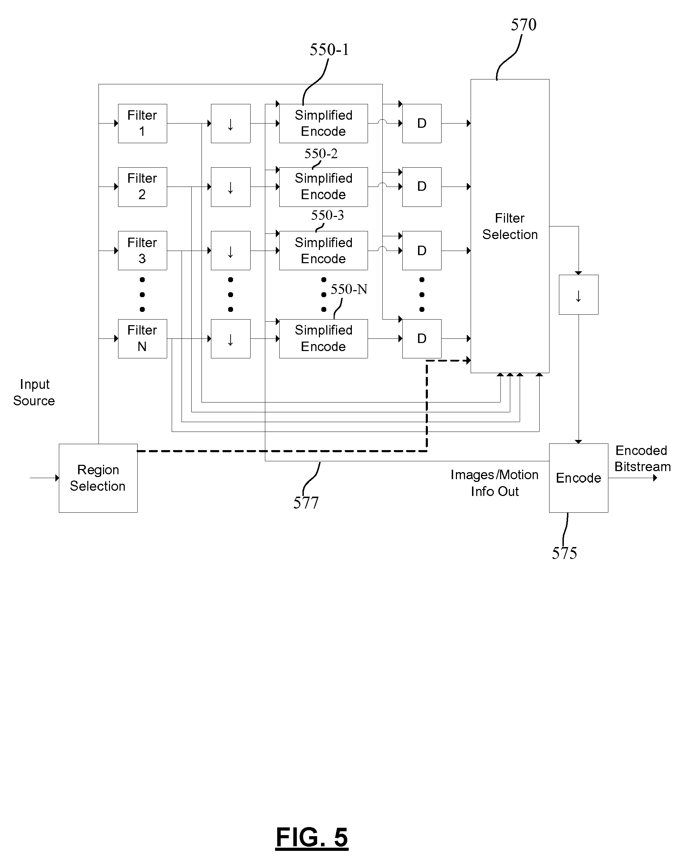

In the following figures, embodiments of methods and devices for selection of pre-processing filters and filter parameters given the knowledge of the prediction process from one layer to the other (e.g., BL to EL) will be described. In particular, the embodiment of FIGURE 3 contains a hypothesis for how the BL to EL prediction will be performed. Such hypothesis is not based on the prediction from the actual BL reconstructed images after compression and is instead based on the prediction from the uncompressed images (open loop). On the other hand, the embodiments of FIGURE 4 relate on prediction from BL reconstructed images after compression (closed loop). As shown in FIGURE 5, however, a simplified compression may be used for the purpose of reducing the complexity of the filter selection process. The simplified compression approximates the behavior of the full compression process, and allows the consideration of coding artifacts and bit rates that may be introduced by the compression process.

FIGURE 3 shows an embodiment of a pre-processor and pre-processing optimization method in accordance with the disclosure. An optional region selection module (310) separates an input image or source (320) into multiple regions. An example of such region selection module is described in US Provisional Application No. 61/170,995 filed on April 20, 2009. Separation of the input image into multiple regions allows a different pre-processing and adaptive interpolation to be performed in each region given the content characteristics of that region.

For each region, a search for the optimal pre-processing filter is performed over a set of filters 1-N denoted as (330-1), (330-2), (330-3), ..., (330-N). The pre-processing filters can be separable or non-separable filters, FIR filters, with different support lengths, directional filters such as horizontal, vertical or diagonal filters, frequency domain filters such as wavelet or discrete cosine transform (DCT) based filters, edge adaptive filters, motion compensated temporal filters, etc.

The output of each filter (330-i) is then subsampled to the resolution for the BL in respective subsampling modules (340-1), (340-2), (340-3), ..., (340-N).

The person skilled in the art will also understand that other embodiments of the pre-processing filters and subsampling modules are also possible, e.g., the pre-processing filters and the subsampling modules can be integrated together in a single component or the pre-processing filters can follow the subsampling modules instead of preceding them as shown in FIGURE 3.

In the case of a 3D stereoscopic scalable video coding system, the subsampled output of each filter is then sent through a 3D interleaver to create subsampled 3D interleaved images that will be part of the base layer video. An example of a 3D interleaver can be found in US Pat. No. 5,193,000. On the other hand, in a non-3D case, a decimator can be provided. Then, the subsampled images are adaptively upsampled using methods such as those described in US Provisional 61/140,886 and US Provisional 61/170,995. The 3D interleaver or decimator and the adaptive upsampling (or, more generally, a technique that processes the subsampled output to form an output image or bitstream) are generically represented as blocks (350-1), (350-2), (350-3), ..., (350-N) in FIGURE 3. As shown in the figure, the adaptive interpolation also uses the original unfiltered information to determine the best interpolation filter. Such information is output from the region selection module (310).

In the distortion calculation modules (360-1), (360-2), (360-3), ..., (360-N), the upsampled images are compared to the original input source and a distortion measure is computed between the original and the processed images. Distortion metrics such as mean squared error (MSE), peak signal to noise ratio (PSNR), as well as perceptual distortion metrics that are more tuned to human visual system characteristics may be used for this purpose.

A filter selection module (370) compares the distortion characteristics of each pre-processing filter (330-i) and selects the optimal pre-processor filter for encoding of that region of the video. The output of the selected filter is then downsampled (385) and further sent through the encoding process (390). Alternatively, the block 370 can select among already downsampled outputs of the filters instead of selecting among the filters. In such case, the downsampling module 385 will not be needed.

The filter selection module (370) may also receive as input (380) additional region-based statistics such as texture, edge information, etc. from the region selector (310), which can help with the filter decisions. For example, depending on the region, the weights given to the distortion estimates of one filter may be increased over another.

The open loop process of FIGURE 3 is not optimal, in the sense that in an actual system, as the one depicted in FIGURE 1, the adaptive interpolation for BL to EL prediction occurs on the decoder reconstructed BL images and not on the original pre-processed content. The open loop process, however, is less computationally intensive and can be performed "offline" prior to the actual encoding of the content.

The person skilled in the art will also understand that the embodiment of FIGURE 3 is not specific to a scalable architecture. Moreover, such embodiment can be applied only to the EL, only to the BL, or both the EL and the BL. Still further, different pre-processors can be used for the BL and EL, if desired. In the case of EL preprocessing, downsampling can still occur on the samples, e.g., samples that were not contained in the BL.

FIGURE 4 illustrates a further example of the present disclosure, where a closed-loop process for performing pre-processor optimization is shown. In particular, an encoding step (450-i) is provided for the subsampled output of each filter (430-i). In the encoding step (450-i) each output of the filters is fully encoded and then reconstructed (455-i), for example according to the scheme of FIGURE 1. In the case of scalable video encoding, such encoding comprises BL encoding, adaptive interpolation for BL to EL prediction, and EL encoding. FIGURE 4 shows an example where both EL filters (435-11) ... (435-1M) are provided for BL filter (430-1) and so on, up to BL filter (430-N), for which EL filters (435-N1) ... (435-NM) are provided.

The encoded and reconstructed bitstreams at the output of modules (455-i) are used for two purposes: i) calculation of distortions (460-i) and ii) inputs (465) of the filter selection module (470). In particular, the filter selection module (470) will select one of the inputs (465) as output encoded bitstream (490) according to the outputs of the distortion modules (460-i). More specifically, the filter that shows the least distortion for each region is selected as the pre-processor.

Filter optimization according to the example of FIGURE 4 can also consider the target or resulting bit rate, in addition to the distortion. In other words, depending on the filter selected, the encoder may require a different number of bits to encode the images. Therefore, in accordance with an example of the present disclosure, the optimal filter selection can consider the bits required for encoding, in addition to the distortion after encoding and/or post-processing. This can be formulated as an optimization problem where the objective is to minimize the distortion subject to a bit rate constraint. A possible technique for doing that is Lagrangian optimization. Such process occurs in the filter selection module (470) and uses i) the distortion computed in the D modules (460-i) and ii) the bit rates available from the encode modules (450-i).

More generally, optimization based on one or more of several types of metrics can also be performed. These metrics can include distortion and/or bit rate mentioned above, but can also be extended to cost, power, time, computational complexity and/or other types of metrics.

While the method discussed in the above paragraph will provide the rate-distortion optimal filter results, it is highly computationally intensive. Several methods for reducing the computational burden of such example will be discussed in the next figures.

FIGURE 5 shows an alternative example where, for each potential filter selection, instead of computing the true encoded and decoder reconstructed image, a simplified encoding (550-i) and reconstruction is used as an estimate of the true decoder reconstruction.

For example, full complexity encoding (575) can be performed only after the filter selection (570) has been completed. Then, the simplified encoders (550-i) can be updated using, for example, the motion and reconstructed image information (577) from the full complexity encoder (575). For example, the reference picture buffers (see elements 160, 170 of FIGURE 1) of the simplified encoders can be updated to contain the reconstructed images from the simplified encoder. Similarly, the motion information generated at the full encoder for previous regions can be used in the disparity estimation module of the simplified encoders (550-i). By way of example, the simplified encoder could create a model based on intra only encoding that uses the same quantization parameters used from the full complexity encoder. Alternatively, the simplified encoder could use filtering that is based on a frequency relationship to quantization parameters used, e.g., by creation of a quantization parameter-to-frequency model. Additionally, should higher accuracy be required, a mismatch between simplified and full complexity encoders could be used to further update the model.

Simplified encoding performed by blocks (550-i) prior to filter selection can be, for example, intra-only encoding in order to eliminate complexity of motion estimation and compensation. On the other hand, if motion estimation is used, then sub-pixel motion estimation may be disabled. A further alternative can be that of using a low complexity rate distortion optimization method instead of exploring all possible coding decisions during compression. Additional filters such as loop filters and post-processing filters may be disabled or simplified. To perform simplification, one can either turn the filter off completely, or limit the number of samples that are used for filtering. It is also possible to tune the filter parameters such that the filter will be used less often and/or use a simplified process to decide whether the filter will be used for a particular block edge. Additionally, filters used for some chroma components may be disabled and estimated based on those used for other chroma or luma components. Also, in another example the filter selection can be optimized for a sub-region (e.g., the central part of each region), instead of optimizing over an entire region. In some cases, the simplified encoder may also perform the encoding at a lower resolution or at a lower rate distortion optimization (RDO) complexity. Moreover, disparity estimation can be constrained to only measure the disparity in full pixel units instead of sub-pixel units. Simplified entropy coding (VLC module) can also be used. Still further, only the luma component for the image can be encoded, and the distortion and rate for the chroma component can be estimated as a function of the luma. In another example the simplified encoding may simply be a prediction process that models the output of blocks 550-i based on the previous output of the full encoder (block 575).

All of the above options can occur in the simplified encoders (550-i). In other words, the simplified encoders (550-i) can comprise all of the encoding modules shown in FIGURE 1 and each of those modules can be simplified (alone or in combination) as described above, trying to keep the output not significantly different from the output of a full encoder.

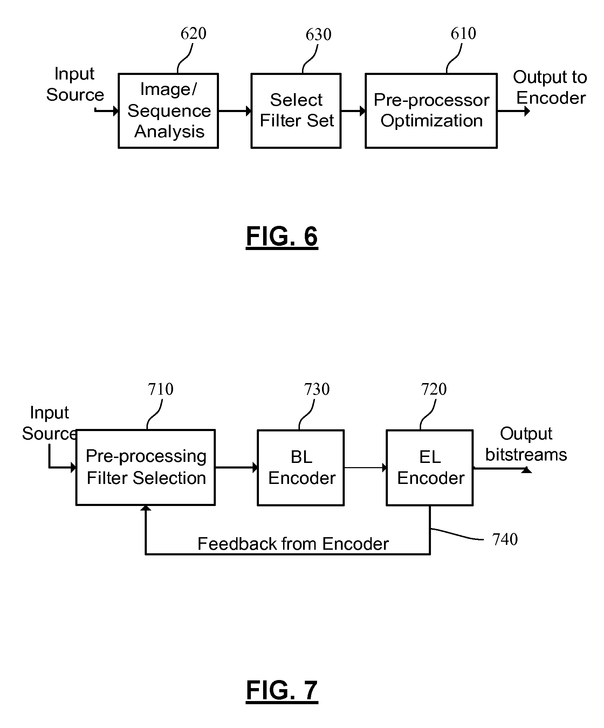

FIGURE 6 shows a further example of the present disclosure, where a pre-processing filter stage (610) is preceded by a sequence/image analysis stage (620). The analysis stage (620) can determine a reduced set (630) of pre-processing filters to be used in the optimization. The image/sequence analysis block (620) can comprise a texture and/or variance (in the spatial domain and/or over time) computation to determine the type of filters that are necessary for the particular application at issue. For example, smooth regions of the image may not require any pre-filtering at all prior to encoding. Some regions may require both spatial and temporal filtering while others may only require spatial or temporal filtering. In the case of bitdepth scalability, the tonemapping curves may be optimized for each region. If directional filters are used, the image analysis module (620) may include edge analysis to determine whether directional filters should be included in the optimization and if so, to determine the dominant directions along which to perform the filtering. If desired, these techniques can be incorporated also in the region selection module. Also, an early termination criterion may be used by which if a filter is shown to provide a rate-distortion performance above a specified threshold, no further filters are evaluated in the optimization. Such method can be easily combined with the image analysis to further reduce the number of filters over which a search is performed.

FIGURE 7 shows yet another embodiment of the present disclosure, where the pre-processing filter selection (710) is aided by additional feedback (740) (in addition to the distortion measure) received from the enhancement layer encoder (720). For example, the feedback could include information on the adaptive upsampling filter parameters used in order to generate the BL to EL prediction. As a consequence, the downsampling filter selection can be adapted to suit the best performing adaptive upsampling filter from the previous stage of optimization. This may also aid in the selection of regions for pre-processing.

For example, the image can be separated into multiple smaller regions and, in the initial stage, a different pre-processing filter can be assumed for each region. Such embodiment can be useful in a simplified system where no prior image analysis is done. In such case, the upsampling information (e.g., whether the upsampler selected the same upsampling filter for multiple regions) can be treated as an indication of how the best downsampling filter selection should also behave. For example, if the upsampling filters are the same for the entire image, maybe it is not necessary to partition the image into regions and optimize the downsampling filters separately for each region.

After encoding the BL in module (730), however, the BL to EL prediction optimization may determine that the same upsampling filter was sufficient for the prediction of multiple regions of the image. In that case, the pre-processor can also be adapted to choose the same, or similar, pre-processing filter for those regions. This will reduce the number of regions over which the entire closed loop optimization needs to be performed, and therefore reduce the computation time of the process. More generally, this step can apply also to configurations different from BL/EL configurations.

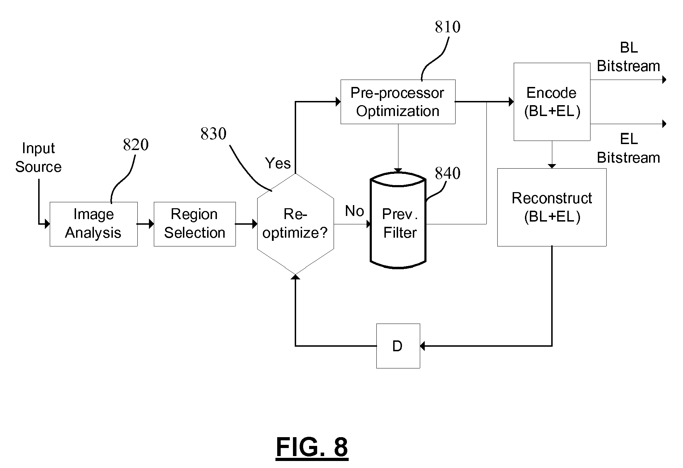

The computational burden of the pre-processor optimization can be further reduced by prediction of the pre-processing filter parameters based on the filters used for previous images, or image regions, of the sequence. FIGURE 8 illustrates an example of such system.

For example, the pre-processor optimization (810) can be performed once every N images/regions where N is fixed or adapted based on the available computing resources and time. In one embodiment, the decision (830) of whether to use previously optimized filter parameters can be dependent on information obtained from the image analysis module (820) (see also the image analysis module (620) of FIGURE 6). For example, if two images, or image regions, are found to be highly correlated, then the filter parameters need to be optimized only once for one of the regions and can then be re-used/refined (840) for the other region. The image regions may be spatial or temporal neighbors or, in the multi-view case, corresponding image regions from each view. For example, when considering two consecutive images of the video sequence, the mean absolute difference of pixel values between the two images can be used as a measure of the temporal correlation and, if the mean absolute difference is below a threshold, then the filters can be reused (840).

In another embodiment, the decision (830) of whether to reuse the same filter or not can be made based on the distortion computation, relative to the original video source, after reconstructing the decoded image. If the computed distortion is above a specified threshold or if the computed distortion increases significantly from that of the previous image/region, then the pre-processor optimization can be performed.

In a yet further embodiment, motion information that is either calculated at the image analysis stage or during video encoding, can be used to determine the motion of regions within the image. Then, the used filter parameters from the previous image can follow the motion of the corresponding region.

In another embodiment, the neighboring regions can be used to determine the filter set over which to perform the search for the optimal filter. For example, if the optimization over the neighboring regions shows that a set of M out of N total possible filters always outperforms the others, then only those M may be used in the optimization of the current image region.

Also, the filter used for the current region can take the form of

$$a*f(L, T, D, P) + b$$

where L is the filtered value using the filter optimized for the image region to the left of the current region, *T* uses the filter optimized for the image region to the top, *D* the image region to the top right, and *P* the co-located image region from the previous image. The function *f* combines the filtered values from each filter using a mean, median, or other measure that also takes into account the similarity of the current region to each neighboring region. The variables *a* and *b* can be constant, or depend on spatial/temporal characteristics such as motion and texture. More generally, the filters considered could be those of neighboring regions that have already been selected. One embodiment for the raster scan could be the just mentioned *L, T, D, P* case.

In a still further embodiment, in addition to the rate-distortion performance of the filters, the "resource-distortion" performance of the filters may also be considered. In this case, the resources can include the available bits but may also include the available power in the encoding device, the computational complexity budget, and also delay constraints in the case of time-constrained applications.

In a still further embodiment, the distortion measurement may contain a combination of multiple distortion metrics, or be calculated taking into account additional factors such as transmission errors and error concealment as well as other post-processing methods used by display or playback devices.

In conclusion, the methods shown in the present disclosure can be used to adaptively pre-process regions of a video sequence. The methods are aimed at improving the rate-distortion performance of the output video while minimizing the computational complexity of the optimization. Although the methods are described as separate embodiments, they can also be used in combination within a low-complexity scalable video encoder.

While examples of the present disclosure have been provided with reference to scalable video delivery techniques, the teachings of the present disclosure also apply to non-scalable video delivery. For example, one application would be if the video is downsampled prior to encoding to reduce the bandwidth requirements and then interpolated after decoding to full resolution. If an adaptive interpolation technique is used, then the downsampling can be optimized to account for the adaptive interpolation. In case of such non-scalable applications, the output will be an adaptively upsampled output instead of being the output of the EL encoder.

Another application is interlaced video coding, where the pre-processing filters can be optimized based on the de-interlacing scheme used at the decoder. Moreover, the teachings of the present disclosure can be applied to non-scalable 3D applications that are similar to interlaced video coding, where the left and right view images can be spatially or temporally downsampled and interleaved prior to encoding, and then adaptively interpolated at the decoder to obtain the full spatial or temporal resolution. In such scenario, both the right and left views can predict from one another. In a different scenario, one layer may contain a frame in a first type of color space representation, bit-depth, and/or scale (e.g. logarithmic or linear) and another layer may contain the same frame in a second type of color space representation, bit-depth, and/or scale. The teachings of this disclosure may be applied to optimize the prediction and compression of samples in one layer from samples in the other layer.

The methods and systems described in the present disclosure may be implemented in hardware, software, firmware or combination thereof. Features described as blocks, modules or components may be implemented together (e.g., in a logic device such as an integrated logic device) or separately (e.g., as separate connected logic devices). The software portion of the methods of the present disclosure may comprise a computer-readable medium which comprises instructions that, when executed, perform, at least in part, the described methods. The computer-readable medium may comprise, for example, a random access memory (RAM) and/or a read-only memory (ROM). The instructions may be executed by a processor (e.g., a digital signal processor (DSP), an application specific integrated circuit (ASIC), or a field programmable logic array (FPGA)).

The examples set forth above are provided to give those of ordinary skill in the art a complete disclosure and description of how to make and use the embodiments of the filter selection for video pre-processing in video applications of the disclosure, and are not intended to limit the scope of what the inventors regard as their disclosure. Modifications of the above-described modes for carrying out the disclosure may be used by persons of skill in the video art, and are intended to be within the scope of the following claims. All patents and publications mentioned in the specification may be indicative of the levels of skill of those skilled in the art to which the disclosure pertains.

It is to be understood that the disclosure is not limited to particular methods or systems, which can, of course, vary. It is also to be understood that the terminology used herein is for the purpose of describing particular embodiments only, and is not intended to be limiting. As used in this specification and the appended claims, the singular forms "a," "an," and "the" include plural referents unless the content clearly dictates otherwise. The term "plurality" includes two or more referents unless the content clearly dictates otherwise. Unless defined otherwise, all technical and scientific terms used herein have the same meaning as commonly understood by one of ordinary skill in the art to which the disclosure pertains.

A number of embodiments of the disclosure have been described. Nevertheless, it will be understood that various modifications may be made without departing from the scope of the present disclosure. Accordingly, other embodiments are within the scope of the following claims.

## Claims

1. A method for selecting a pre-processing filter for scalable video delivery, wherein the scalable video delivery comprises encoding and reconstructing input images through a base layer and one or more enhancement layers, the method comprising:

   inputting one or more input images into a plurality of pre-processing filters, wherein each input image in the one or more input images is separated into at least one region;
   processing the output of each pre-processing filter to form, for each pre-processing filter, an output image or data stream, wherein the processing comprises, for each pre-processing filter:

   subsampling an input image from among the one or more input images to a first resolution to obtain a subsampled image;
   base layer encoding the subsampled image;
   adaptively interpolating the base layer encoded subsampled image for a base layer to enhancement layer prediction; and
   enhancement layer encoding the adaptively interpolated image to a second resolution to obtain the output image or data stream, wherein adaptive interpolation filter parameters used for the adaptive interpolating can vary for different regions in the subsampled image;

   for each pre-processing filter, evaluating a distortion metric of the output image or data stream; and
   selecting a pre-processing filter among the plurality of pre-processing filters based on the evaluated distortion metric for each pre-processing filter and feedback from the adaptively interpolating, wherein the feedback comprises information on the adaptive interpolation filter parameters used for the adaptive interpolating.

2. The method of claim 1, wherein, in case of 3D video input, the processing the output of each pre-processing filter comprises interleaving the subsampled output of each pre-processing filter to create subsampled 3D interleaved images.

3. The method of claim 1, wherein, in case of non-3D video input, the processing the output of each pre-processing filter comprises decimating the subsampled output of each pre-processing filter.

4. The method of any one of the previous claims, further comprising:

analyzing the input images before inputting the input images to the plurality of pre-processing filters by determining a measure of correlation between the analyzed input images and previous input images; and

if the measure of correlation exceeds a threshold, reducing the number of pre-processing filters to which the input images will be input or the number of regions to be later selected by reusing pre-processing filters with previously optimized pre-processing filter parameters.

5. The method of claim 4, wherein
the method is for scalable video delivery, the scalable video delivery comprising encoding and reconstructing the input images through a base layer and one or more enhancement layers, and
the plurality of pre-processing filters comprise a plurality of base layer filters and a plurality of enhancement layer filters.

6. A pre-processing filter selector for scalable video delivery, wherein the scalable video delivery comprises encoding and reconstructing input images through a base layer and one or more enhancement layers, the pre-processing filter selector comprising:

a plurality of pre-processing filters adapted to receive an input image;
processing modules to process the output of each pre-processing filter to form an output image or data stream, wherein the processing modules comprise:

a subsampling filter for subsampling an input image from among the one or more input images to a first resolution to obtain a subsampled image;
a base layer encoder for encoding the subsampled image;
an adaptive interpolation filter for adaptive interpolating of the base layer encoded subsampled image for a base layer to enhancement layer prediction; and
an enhancement layer encoder for encoding the adaptively interpolated image to a second resolution to obtain the output image or data stream, wherein adaptive interpolating filter parameters of the adaptive interpolation filter can vary for different regions in the subsampled image;

distortion metrics evaluation modules to evaluate, for each pre-processing filter, a distortion metric of the output image or data stream; and
a pre-processing filter selector to select a preprocessing filter among the plurality of preprocessing filters based on the evaluated distortion metric for each pre-processing filter by the distortion metrics evaluation modules and feedback from the adaptive interpolation filter, wherein the feedback comprises information on the adaptive interpolation filter parameters used for the adaptive interpolating.

7. The pre-processing filter selector of claim 6, further comprising a region selector for selecting one or more regions of the input image, wherein the plurality of processing filters are connected with the region selector and are adapted to receive the selected one or more regions.

8. The pre-processing filter selector of claim 6, wherein the video delivery is a scalable video delivery, comprising base layer encoding and enhancement layer encoding.

9. The pre-processing filter selector of claim 6, wherein the video delivery is a non-scalable video delivery.

**Patentansprüche**

1. Verfahren zur Auswahl eines Vorverarbeitungsfilters zur skalierbaren Videobereitstellung, wobei die skalierbare Videobereitstellung Codieren und Rekonstruieren von Eingabebildern durch eine Basisschicht und eine oder mehrere Erweiterungsschichten umfasst, wobei das Verfahren Folgendes umfasst:

Eingeben eines oder mehrerer Eingabebilder in mehrere Vorverarbeitungsfilter, wobei jedes Eingabebild in dem einen oder den mehreren Eingabebildern in wenigstens ein Gebiet separiert wird;
Verarbeiten der Ausgabe jedes Vorverarbeitungsfilters zum Bilden eines Ausgabebildes oder eines Ausgabedatenstroms für jeden Vorverarbeitungsfilter, wobei das Verarbeiten für jeden Vorverarbeitungsfilter Folgendes umfasst:

Unterabtastung eines Eingabebildes aus dem einen oder den mehreren Eingabebildern zu einer ersten Auflösung, um ein unterabgetastetes Bild zu erhalten;
Basisschichtcodieren des unterabgetasteten Bildes;
adaptives Interpolieren des basisschichtcodierten unterabgetasteten Bildes für eine Basisschicht-zur-Erweiterungsschicht-Vorhersage und
Erweiterungsschichtcodieren des adaptiv interpolierten Bildes zu einer zweiten Auflösung, um das Ausgabebild oder den Ausgabedatenstrom zu erhalten, wobei adaptive Interpolationsfilterparameter, die zur adaptiven Interpolation verwendet werden, für verschiedene Gebiete in dem unterabgetasteten Bild variieren können;

Auswerten einer Verzerrungsmetrik des Ausgabebildes oder des Ausgabedatenstroms für jeden Vorverarbeitungsfilter und Auswählen eines Vorverarbeitungsfilters aus den mehreren Vorverarbeitungsfiltern, basierend auf der ausgewerteten Verzerrungsmetrik für jeden Vorverarbeitungsfilter und Rückmeldung aus der adaptiven Interpolation, wobei die Rückmeldung Informationen über die adaptiven Interpolationsfilterparameter umfasst, die für die adaptive Interpolation verwendet wurden.

2. Verfahren nach Anspruch 1, wobei im Fall von 3D-Videoeingabe das Verarbeiten der Ausgabe jedes Vorverarbeitungsfilters Verschachteln der unterabgetasteten Ausgabe jedes Vorverarbeitungsfilters zur Erzeugung von unterabgetasteten, 3D-verschachtelten Bildern umfasst.

3. Verfahren nach Anspruch 1, wobei im Fall von Nicht-3D-Videoeingabe das Verarbeiten der Ausgabe jedes Vorverarbeitungsfilters Dezimation der unterabgetasteten Ausgabe jedes Vorverarbeitungsfilters umfasst.

4. Verfahren nach einem der vorausgehenden Ansprüche, ferner umfassend:

Analysieren der Eingabebilder vor dem Eingeben der Eingabebilder in die mehreren Vorverarbeitungsfilter, indem ein Maß von Korrelation zwischen den analysierten Eingabebildern und vorherigen Eingabebildern bestimmt wird; und Reduzieren der Anzahl von Vorverarbeitungsfiltern, in die die Eingabebilder eingegeben werden, oder der Anzahl von Gebieten, die später durch Wiederverwenden von Vorverarbeitungsfiltern mit zuvor optimierten Vorverarbeitungsfilterparametern ausgewählt werden sollen, falls das Maß der Korrelation eine Schwelle überschreitet.

5. Verfahren nach Anspruch 4, wobei das Verfahren für skalierbare Videobereitstellung ausgelegt ist, wobei die skalierbare Videobereitstellung Codieren und Rekonstruieren der Eingabebilder durch eine Basisschicht und eine oder mehrere Erweiterungsschichten umfasst, und die mehreren Vorverarbeitungsfilter mehrere Basisschichtfilter und mehrere Erweiterungsschichtfilter umfassen.

6. Vorverarbeitungsfilterauswahlvorrichtung zur skalierbaren Videobereitstellung, wobei die skalierbare Videobereitstellung Codieren und Rekonstruieren von Eingabebildern durch eine Basisschicht und eine oder mehrere Erweiterungsschichten umfasst, wobei die Vorverarbeitungsfilterauswahlvorrichtung Folgendes umfasst:

mehrere Vorverarbeitungsfilter, die zum Empfangen eines Eingabebildes angepasst sind; Verarbeitungsmodule zum Verarbeiten der Ausgabe jedes Vorverarbeitungsfilters zum Bilden eines Ausgabebildes oder Ausgabedatenstroms, wobei die Verarbeitungsmodule Folgendes umfassen:

einen Unterabtastungsfilter zum Unterabtasten eines Eingabebildes aus dem einen oder den mehreren Eingabebildern zu einer ersten Auflösung, um ein unterabgetastetes Bild zu erhalten; einen Basisschichtcodierer zum Codieren der unterabgetasteten Bilder; einen adaptiven Interpolationsfilter zum adaptiven Interpolieren des basisschichtcodierten unterabgetasteten Bildes für eine Basisschicht-zur-Erweiterungsschicht-Vorhersage und einen Erweiterungsschichtcodierer zum Codieren des adaptiv interpolierten Bildes zu einer zweiten Auflösung, um das Ausgabebild oder den Ausgabedatenstrom zu erhalten, wobei adaptive Interpolationsfilterparameter des adaptiven Interpolationsfilters für verschiedene Gebiete in dem unterabgetasteten Bild variieren können;

Verzerrungsmetrikauswertungsmodule zum Auswerten einer Verzerrungsmetrik des Ausgabebildes oder Ausgabedatenstroms für jeden Vorverarbeitungsfilter und eine Vorverarbeitungsfilterauswahlvorrichtung zum Auswählen eines Vorverarbeitungsfilters aus den mehreren Vorverarbeitungsfiltern basierend auf der ausgewerteten Verzerrungsmetrik für jeden Vorverarbeitungsfilter durch die Verzerrungsmetrikauswertungsmodule und Rückmeldung von dem adaptiven Interpolationsfilter, wobei die Rückmeldung Informationen über die adaptiven Interpolationsfilterparameter umfasst, die für die adaptive Interpolation verwendet wurden.

7. Vorverarbeitungsfilterauswahlvorrichtung nach Anspruch 6, ferner eine Gebietsauswahlvorrichtung zum Auswählen eines oder mehrerer Gebiete des Eingabebildes umfassend, wobei die mehreren Verarbeitungsfilter mit der Gebietsauswahlvorrichtung verbunden sind und zum Empfangen der einen oder der mehreren ausgewählten Gebiete angepasst sind.

8. Vorverarbeitungsfilterauswahlvorrichtung nach Anspruch 6, wobei die Videobereitstellung eine skalierbare Videobereitstellung ist, die eine Basisschichtcodierung und eine Erweiterungsschichtcodierung umfasst.

9. Vorverarbeitungsfilterauswahlvorrichtung nach Anspruch 6, wobei die Videobereitstellung eine nichtskalierbare Videobereitstellung ist.

## Revendications

1. Procédé de sélection d'un filtre de prétraitement pour une distribution extensible de vidéo, la distribution extensible de vidéo comportant le codage et la reconstitution d'images d'entrée par l'intermédiaire d'une couche de base et d'une ou plusieurs couches d'amélioration, le procédé comportant les étapes consistant à :

   introduire une ou plusieurs images d'entrée dans une pluralité de filtres de prétraitement, chaque image d'entrée parmi l'image ou les images d'entrée étant séparée en au moins une région ;
   traiter la sortie de chaque filtre de prétraitement pour former, pour chaque filtre de prétraitement, une image de sortie ou un flux de données, le traitement comportant, pour chaque filtre de prétraitement, les étapes consistant à :

      sous-échantillonner une image d'entrée parmi l'image ou les images d'entrée à une première résolution pour obtenir une image sous-échantillonnée ;
      appliquer un codage en couche de base à l'image sous-échantillonnée ;
      interpoler de façon adaptative l'image sous-échantillonnée codée en couche de base en vue d'une prédiction de la couche de base vers une couche d'amélioration ; et
      appliquer un codage en couche d'amélioration à l'image issue de l'interpolation adaptative vers une deuxième résolution pour obtenir l'image de sortie ou le flux de données, des paramètres de filtre d'interpolation adaptative utilisés pour l'interpolation adaptative pouvant varier pour différentes régions de l'image sous-échantillonnée ;

   pour chaque filtre de prétraitement, évaluer une métrique de distorsion de l'image de sortie ou du flux de données ; et
   sélectionner un filtre de prétraitement parmi la pluralité de filtres de prétraitement sur la base de la métrique de distorsion évaluée pour chaque filtre de prétraitement et d'une rétroaction provenant de l'interpolation adaptative, la rétroaction comportant des informations sur les paramètres de filtre d'interpolation adaptative utilisés pour l'interpolation adaptative.

2. Procédé selon la revendication 1, le traitement de la sortie de chaque filtre de prétraitement comportant, en cas d'entrée vidéo 3D, l'étape consistant à entrelacer la sortie sous-échantillonnée de chaque filtre de prétraitement pour créer des images 3D entrelacées sous-échantillonnées.

3. Procédé selon la revendication 1, le traitement de la sortie de chaque filtre de prétraitement comportant, en cas d'entrée vidéo non 3D, l'étape consistant à décimer la sortie sous-échantillonnée de chaque filtre de prétraitement.

4. Procédé selon l'une quelconque des revendications précédentes, comportant en outre les étapes consistant à :

   analyser les images d'entrée avant d'introduire les images d'entrée dans la pluralité de filtres de prétraitement en déterminant une mesure de corrélation entre les images d'entrée analysées et des images d'entrée précédentes ; et
   si la mesure de corrélation dépasse un seuil, réduire le nombre de filtres de prétraitement dans lesquels les images d'entrée vont être introduites ou le nombre de régions à sélectionner ultérieurement en réutilisant des filtres de prétraitement avec des paramètres de filtres de prétraitement optimisés auparavant.

5. Procédé selon la revendication 4, le procédé étant destiné à la distribution extensible de vidéo, la distribution extensible de vidéo comportant le codage et la reconstitution des images d'entrée par l'intermédiaire d'une couche de base et d'une ou plusieurs couches d'amélioration, et la pluralité de filtres de prétraitement comportant une pluralité de filtres de couche de base et une pluralité de filtres de couches d'amélioration.

6. Sélecteur de filtres de prétraitement pour une distribution extensible de vidéo, la distribution extensible de vidéo comportant le codage et la reconstitution d'images d'entrée par l'intermédiaire d'une couche de base et d'une ou plusieurs couches d'amélioration, le sélecteur de filtres de prétraitement comportant :

   une pluralité de filtres de prétraitement prévus pour recevoir une image d'entrée ;
   des modules de traitement servant à traiter la sortie de chaque filtre de prétraitement pour former une image de sortie ou un flux de données, les modules de traitement comportant :

un filtre de sous-échantillonnage destiné à sous-échantillonner une image d'entrée parmi l'image ou les images d'entrée à une première résolution pour obtenir une image sous-échantillonnée ;
un codeur en couche de base destiné à coder l'image sous-échantillonnée ;
un filtre d'interpolation adaptative destiné à interpoler de façon adaptative l'image sous-échantillonnée codée en couche de base en vue d'une prédiction de la couche de base vers une couche d'amélioration ; et
un codeur en couche d'amélioration destiné à coder l'image issue de l'interpolation adaptative vers une deuxième résolution pour obtenir l'image de sortie ou le flux de données, des paramètres de filtre d'interpolation adaptative du filtre d'interpolation adaptative pouvant varier pour différentes régions de l'image sous-échantillonnée ;

des modules d'évaluation de métriques de distorsion servant à évaluer, pour chaque filtre de prétraitement, une métrique de distorsion de l'image de sortie ou du flux de données ; et
un sélecteur de filtres de prétraitement servant à sélectionner un filtre de prétraitement parmi la pluralité de filtres de prétraitement sur la base de la métrique de distorsion évaluée pour chaque filtre de prétraitement par les modules d'évaluation de métriques de distorsion et d'une rétroaction provenant du filtre d'interpolation adaptative, la rétroaction comportant des informations sur les paramètres de filtre d'interpolation adaptative utilisés pour l'interpolation adaptative.

7. Sélecteur de filtres de prétraitement selon la revendication 6, comportant en outre un sélecteur de régions destiné à sélectionner une ou plusieurs régions de l'image d'entrée, la pluralité de filtres de traitement étant reliée au sélecteur de régions et étant prévue pour recevoir la ou les régions sélectionnées.

8. Sélecteur de filtres de prétraitement selon la revendication 6, la distribution de vidéo étant une distribution extensible de vidéo, comportant un codage en couche de base et un codage en couche d'amélioration.

9. Sélecteur de filtres de prétraitement selon la revendication 6, la distribution de vidéo étant une distribution non extensible de vidéo.

**FIG. 1**

**FIG. 2**

**FIG. 3**

**FIG. 4**

**FIG. 5**

Input
Source →| Image/<br>Sequence<br>Analysis | → | Select<br>Filter Set | → | Pre-processor<br>Optimization | → Output to<br>Encoder

620 630 610

**FIG. 6**

Input
Source →| Pre-processing<br>Filter Selection | → | BL<br>Encoder | → | EL<br>Encoder | → Output<br>bitstreams

710 730 720

Feedback from Encoder

740

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 10719456 A
- US 2010031693 W
- US 61242242 B
- US 61140886 B
- US 61170995 B
- US 5193000 A

**Non-patent literature cited in the description**

- **J.R. OHM.** Advances in Scalable Video Coding. *Proceedings of the IEEE,* January 2005, vol. 93 (1
- **W. LI ; J-R. OHM ; M. VAN DER SCHAAR ; H. JIANG ; S. LI.** MPEG-4 Video Verification Model Version 18.0. *ISO/IEC JTC1/SC29/WG11 N3908,* January 2001
- **E. DUBOIS ; S. SABRI.** Noise Reduction in Image Sequences Using Motion-Compensated Temporal Filtering. *IEEE Trans. on Communications,* July 1984, vol. COM-32 (7
- **S. CHANG ; B. YU ; M. VETTERLI.** Adaptive Wavelet Thresholding for Image Denoising and Compression. *IEEE Trans. On Image Processing,* September 2000, vol. 9 (9), 1532-1546
- **Y. TSAIG ; M. ELAD ; P. MILANFAR ; G. GOLUB.** Variable Projection for Near-Optimal Filtering in Low Bit-Rate Coders. *IEEE Trans. on Circuits and Systems for Video Technology,* January 2005, vol. 15 (1), 154-160